# EUROPEAN PATENT SPECIFICATION

(11) **EP 1 549 030 B1**
(45) Date of publication and mention of the grant of the patent: **02.02.2011**
(21) Application number: 04030682.1
(22) Date of filing: 23.12.2004
(51) Int. Cl.: H04M 1/02

(54) **Mobile terminal having double rotation structure**
Mobilendgerät mit doppelter Rotationseinrichtung
Terminal mobile avec double structure de rotation

(30) Priority: 26.12.2003 KR 2003097981
(43) Date of publication of application: 29.06.2005
(73) Proprietor: LG Electronics Inc., Seoul 150-721 (KR)
(72) Inventor: Kim, Moon-Young, Seoul (KR)
(74) Representative: Beyer, Andreas

(56) References cited:
- EP-A- 0 898 405
- EP-A- 1 267 576
- WO-A-02/091604
- GB-A- 2 387 063
- US-A1- 2001 004 269
- US-A1- 2003 109 232
- US-A1- 2003 125 079
- PATENT ABSTRACTS OF JAPAN vol. 2002, no. 02, 2 April 2002 (2002-04-02) & JP 2001 298516 A (MATSUSHITA ELECTRIC IND CO LTD), 26 October 2001 (2001-10-26)

## Description

### BACKGROUND OF THE INVENTION

### 1. Field of the Invention

The present invention relates to a mobile terminal having a double rotation structure, and particularly, to a mobile terminal having a double rotation structure by which a folder can be freely folded and unfolded through a connection member which couples a main body and the folder, and a position of a camera installed in the connection member can be freely adjusted.

### 2. Description of the Background Art

A mobile terminal provides functions of a multimedia and an internet as well as a function which simply transmits voice or data. Also, the mobile terminal has a camera therein and thus can transmit/receive an image shot by the camera to/from a counter mobile terminal.

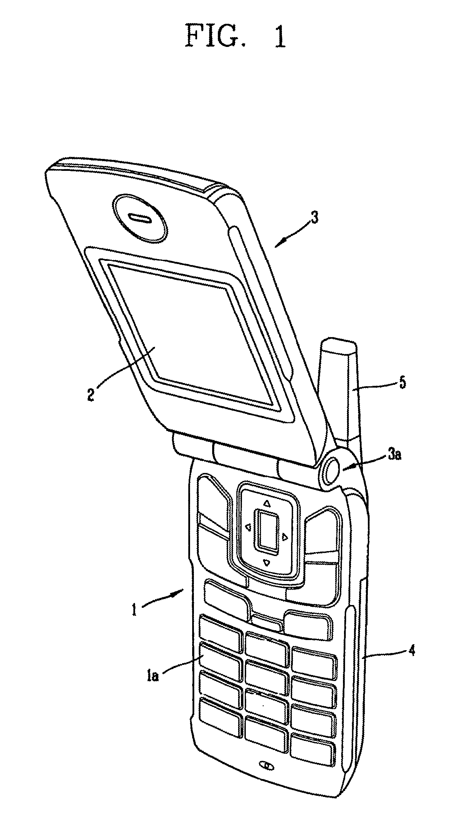

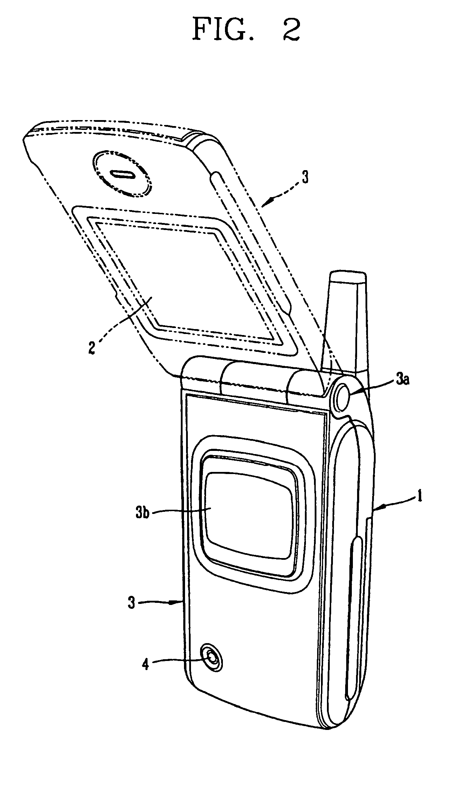

Figure 1 is a perspective view showing a conventional folder type mobile terminal, and Figure 2 is a diagram showing an operation of the conventional folder type mobile terminal.

Referring to Figures 1 and 2, the conventional mobile terminal is comprised of: a main body 1 having a plurality of buttons 1 a thereon; a folder 3 rotatably-coupled to the main body 1 by its one end through a hinge portion 3a, installed to be opened or closed (i.e., folded or unfolded) with respect to the terminal main body 1, protecting the terminal main body 1, and having a main display portion 2 thereon which allows to see a counterpart therethrough; and a camera 4 mounted on the folder 3.

A sub-display portion 3b is installed at the front side of the folder 3 to see an image shot by the camera 4.

In the conventional mobile terminal, constructed as aforementioned, during a voice transmitting/receiving mode, a user rotates the folder 3 as much as a certain angle centering around the hinge portion 3a to open it, as can be seen from Figure 2.

Also, during a counterpart shooting mode, after a user adjusts a position of the camera 4 to be focused on the counterpart with the folder 3 being moved, the user films the counterpart by pressing the buttons 1 a. Thereafter, the user can see the shot image through the main display portion 2.

Furthermore, during a user himself/herself shooting mode, after the user adjusts the position of the camera 4 to be focused on the user himself/herself by turning back the folder 3, the user presses the button 1a to shoot himself/herself. Thereafter, the user can see the shot image through the sub-display portion 3b.

However, the conventional mobile terminal has a simple structure which can be only embodied to open the folder as much as 120~180°. Thus, because it has a limited open angle for the folder, it is inconvenient to fold and unfold the folder.

Moreover, during the user himself/herself shooting mode, due to the structure of the mobile terminal, the user can not see the main display portion, but rather shoots himself/herself with seeing only the sub-display portion. As a result of this, it is inconvenient to use the mobile terminal for that purpose.

GB 2 387 063 A relates to a foldable information apparatus comprising an upper unit having a display section, a lower unit having operation keys, and a biaxial hinge connecting the units and allowing the upper unit to be opened and closed about a first rotation axis and rotated relative to the lower unit about a second rotation axis. The hinge section has an optical section provided on a top portion comprising a camera and/or an LED. This top portion of the hinge section is always exposed in the open, closed or rotated states of the upper and lower units.

EP 0 898 405 A2 refers to an information communication terminal device, wherein an upper case and a lower case are rotatably connected in a connection part. The connection part is constructed by a rotary shaft supporting part integrated in the lower case, a rotary shaft which is integrated in the upper case and a part of which is rotatably fit into the rotary shaft supporting part, and a housing member having a part rotatably fit into the rotary shaft supporting part. A video camera and a camera lens are housed in the housing member. A display/operation part is provided almost in the whole upper case and a display/operation part is provided almost in the whole lower case. In the display/operation parts, in addition to camera images of the video camera, a reception image, and various data, touch-type operation buttons are displayed. The display/operation parts have the functions as the operation part as well as the display part.

WO 02/091604 A2 relates to a radiotelephone including a first unit, a second unit and a third unit with a camera. A hinge device couples the third unit to the first unit to rotate about an axis with respect to the first unit. The hinge device includes a case, a first rotary member, a linear movable member, a resilient member, a second rotary member and a support member. The case has a stopping wall. The first rotary member rotates about the axis with respect to the case and is coupled to the second unit. The linear movable member moves linearly along the axis by interaction with the first rotary member. The resilient member pushes the linear movable member toward the first rotary member. The second rotary member rotates about the axis with respect to the case and is coupled to the third unit. The second rotary member is pushed toward the wall.

### SUMMARY OF THE INVENTION

Therefore, an object of the present invention is to provide a mobile terminal having a double rotation structure by which a folder can be freely opened and closed (i.e., folded and unfolded) through a connection member which couples a main body to the folder, and a position of a camera installed in the connection member can be freely adjusted.

To achieve these and other advantages and in accordance with the purpose of the present invention, as embodied and broadly described herein, there is provided a mobile terminal having a double rotation structure, comprising: a main body having a plurality of keys thereon for inputting information and operating functions; a folder having a display portion thereon; a connection member including a first connecting portion having a camera therein and a second connecting portion integrally formed with the first connecting portion, and rotatably coupling the main body to the first connecting portion and the folder to the second connecting portion; and a connection member locking unit installed at one side of the main body in order to stop rotation of the connection member selectively.

A first receiving groove is formed for reception of the connection member at one side of the main body, and a second receiving groove is also formed for reception of the connection member at one side of the folder.

A first hinge groove is formed at one surface of the first connecting portion, a first hinge axis is formed at one surface of the main body to be inserted in the first hinge groove, a second hinge groove is a Iso formed atone surface of the second connecting portion to correspond to the first hinge groove, and a second hinge axis is formed at one surface of the folder to be inserted in the second hinge groove.

A first auxiliary groove is formed at the other surface of the first connecting portion, a first mounting groove is formed at the other surface of the main body, a second auxiliary groove is formed at the other surface of the second connecting portion, and a second mounting groove is formed at the other surface of the folder. Also, a first auxiliary pin is inserted in the first auxiliary groove and the first mounting groove, and a second a uxiliary pin is inserted in the second a uxiliary groove and the second mounting groove.

The first auxiliary pin is comprised of a first fixing portion inserted in the first mounting groove, and a first rotating portion coupled rotatably and axially to the first fixing portion and inserted in the first auxiliary groove. The second auxiliary pin, on the other hand, is comprised of: a second fixing portion inserted in the second mounting groove, and a second rotating portion coupled rotatably and axially to the second fixing portion and inserted in the second auxiliary groove.

The main body is rotatably installed centering around the first hinge axis and the first auxiliary pin. The folder is rotatably installed centering around the second hinge axis and the second auxiliary pin.

The first connecting portion is rotatably installed centering around the first hinge axis and the first auxiliary pin, and the second connecting portion is rotatably installed centering around the second hinge axis and the second auxiliary pin.

The connection member locking unit is comprised of: a slider installed to be slid in the main body and having a locking projection formed at one surface thereof to be selectively inserted into a locking groove placed in the connection member, and a hand grip formed at the other surface thereof; and a spring installed adjacent to the slider to move the slider flexibly.

A slot is formed at an upper surface of the main body, and the hand grip is exposed out of the main body through the slot.

A stopping jaw is formed between the first and second connecting portions of the connection member. The stopping jaw thereby constantly maintains an opened angle of the folder when it is opened.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a perspective view illustrating a conventional folder type mobile terminal;
Figure 2 is a diagram showing an operation of a conventional folder type mobile terminal;
Figure 3 is a perspective view illustrating a mobile terminal having a double rotation structure in accordance with the present invention;
Figure 4 is a side view of the mobile terminal shown in Figure 3;
Figure 5 is a disassembled perspective view showing main parts of a mobile terminal having a double rotation structure in accordance with the present invention;
Figure 6 is a cross-sectional view showing a first auxiliary pin of a mobile terminal having a double rotation structure in accordance with the present invention;
Figure 7 is a cross-sectional view showing a second auxiliary pin of a mobile terminal having a double rotation structure in accordance with the present invention;
Figure 8 is a side view illustrating a connection member in a rotated state, of a mobile terminal having a double rotation structure in accordance with the present invention;
Figure 9 is a front view showing a state that a mobile terminal having a double rotation structure is installed at right angles to a bottom surface in accordance with the present invention; and
Figure 10 is a side view of the state shown in Figure 9.

### DETAILED DESCRIPTION OF THE PREFERRED EMBODIMENTS

Reference will now be made in detail to the preferred embodiments of the present invention, examples of which are illustrated in the accompanying drawings.

A mobile t erminal h aving a d ouble rotation structure in a ccordance with the present invention will be described with reference to attached drawings as follows.

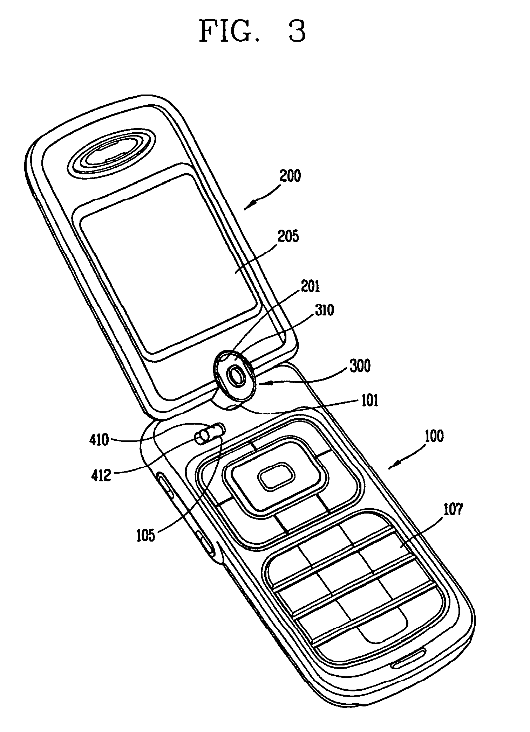

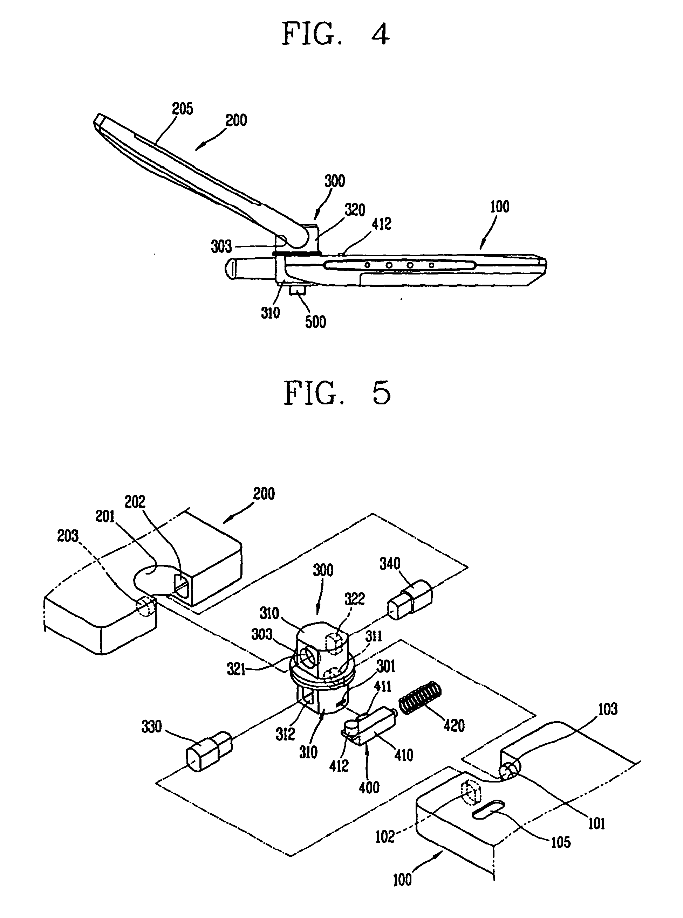

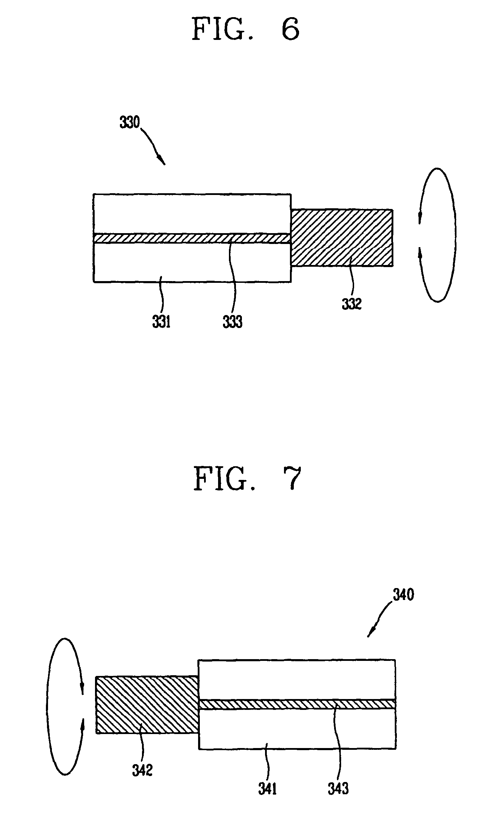

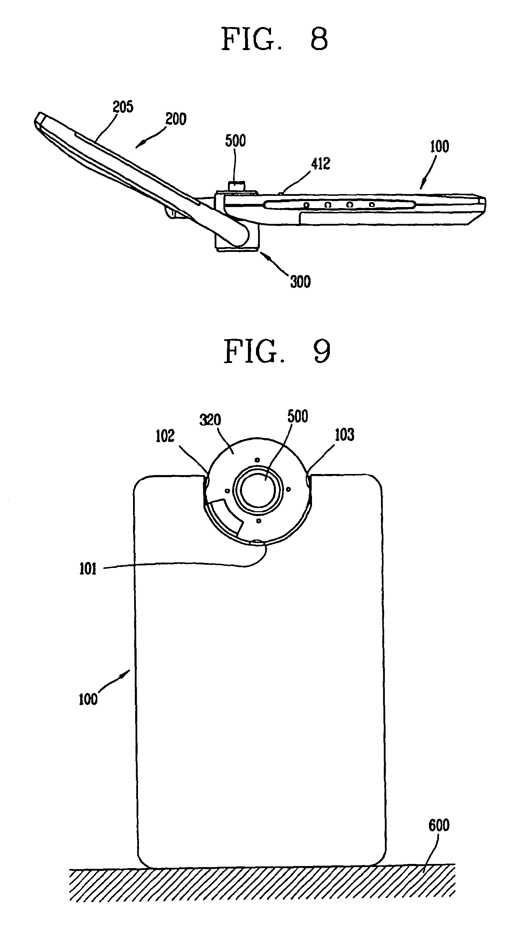

Figure 3 is a perspective view showing a mobile terminal having a double rotation structure in accordance with the present invention, Figure 4 is a side view of Figure 3, Figure 5 is a disassembled perspective view showing main parts of the mobile terminal having a double rotation structure in accordance with the present invention, Figure 6 is a side view showing a first auxiliary pin of the mobile terminal having a double rotation structure in accordance with the present invention, Figure 7 is a cross-sectional view showing a second auxiliary pin of the mobile terminal having a double rotation structure in accordance with the present invention, and Figure 8 is a side view illustrating a connection member in a rotated state of the mobile terminal having a double rotation structure in accordance with the present invention.

As shown in those drawings, the mobile terminal having a double rotation structure in accordance with the present invention includes: a main body 100 having a plurality of keys 107 thereon to input information and operate functions; a folder 200 having a display portion 205 thereon; a connection member 300 having a first connecting portion 310 with a camera 500 therein and a second connecting portion 320 integrally formed with the first connecting portion 310, in which the first connecting portion 310 is rotatably coupled to the main body 100 and the second connecting portion 320 is rotatably coupled to the folder 200; and a connection member locking unit 400 installed at one side of the main body 100 to selectively stop a rotation of the connection member 300.

A first receiving groove 101 is formed at one side of the main body 100 for reception of the connection member 300, and a second receiving groove 201 is formed at one side of the folder 200 for reception of the connection member 300.

A first hinge groove 311 is formed at one surface of the first connecting portion 310 and a first hinge axis 103 is formed at one surface of the main body 100, in particular, at an inner circumferential surface of the first receiving groove 101, to be inserted in the first hinge groove 311.

A second hinge groove 321 is formed at one surface of the second connecting portion 320 to correspond with the first hinge groove 311, and a second hinge axis 203 is formed at one surface of the folder 200, in particular, at an inner circumferential surface of the second receiving groove 201, to be inserted in the second hinge groove 321.

The first hinge groove 311 and the second hinge groove 321 of the connection member 300 are crossed each other, and the first hinge axis 103 and the second hinge axis 203 are also crossed each other.

A first auxiliary groove 312 is formed at the other side of the first connecting p ortion 310, a nd a first mounting g roove 1 02 i s formed at t he other side of the main body 100.

A first auxiliary pin 330 is inserted in the first auxiliary groove 312 and the first mounting groove 102.

Moreover, a second auxiliary groove 322 is formed at the other side of the second connecting portion 320, and a second mounting groove 202 is formed at the other side of the folder 200.

A second auxiliary pin 340 is inserted in the second auxiliary groove 322 and the second mounting groove 202.

As can be seen from Figure 6, the first auxiliary pin 330 is comprised of: a first fixing portion 331 inserted in the first mounting groove 102: and a first rotating portion 332 coupled rotatably and axially to the first fixing portion 331 and inserted to the first auxiliary groove 312.

As can be seen from Figure 7, the second auxiliary pin 340 is also comprised of: a second fixing portion 431 inserted in the second mounting groove 202, and a second rotating portion 432 coupled rotatably and axially to the second fixing portion 431 and inserted to the second auxiliary groove 322.

The main body 100 is rotatably installed centering around the first hinge axis 103 and the first auxiliary pin 330. The folder 200 is also rotatably installed centering around the second hinge axis 203 and the second auxiliary pin 340.

As aforementioned, the main body 100 is rotatably installed centering around the first hinge axis 103 and the first auxiliary pin 330. The folder 200 is also rotatably installed centering around the second hinge axis 203 and the second auxiliary pin 340. Furthermore, as can be seen from Figure 8, the connection member 300 can be rotated as much as a certain angle in a state that the main body 100 and the folder 200 are not rotated. That is, in the mobile terminal having a double rotation structure in accordance with the present invention, the folder can be rotated and the connection member can also be rotated with the folder being left as it is.

In this double rotation structure, because a user can freely adjust a direction of the camera 500 installed in the connection member 300 toward the user himself/herself or his/her counterpart, the user can conveniently shoot an image with watching the main display portion at any time.

That is, in the conventional mobile terminal, when desiring to shoot himself/herself using the camera, the user shot an image with watching the sub-display portion formed at the front surface of the folder by turning the mobile terminal itself as much as 180°.

However, in the mobile terminal having the double rotation structure in accordance with the present invention, there is no use of moving the folder 200 and the main body 100, because the connection member 300 is rotated in order for the camera 500 to face the user himself/herself.

To achieve these functions, the first connecting portion 310 is rotatably installed centering around the first hinge axis 103 and the first auxiliary pin 330, and the second connecting portion 320 is rotatably installed centering around the second hinge axis 203 and the second auxiliary pin 340.

Hereinafter, it will be described about the connection member locking unit 400 used for the connection member 300 not to be moved arbitrarily.

The connection member locking unit 400 fixes the connection member 300 not to be rotated during a voice transmitting/receiving mode(General Mode).

Only in case that the rotation of the connection member 300 is required, such as the user himself/herself shooting mode, the connection member locking unit 400 performs a function of converting the connection member 300 into a rotatable state.

The connection member locking member 400 is comprised of: a slider 410 installed to be slid in the main body 100 and having a locking projection 411 formed at one surface thereof to be selectively inserted in a locking groove 301 placed in the connection member 300, and a hand grip 412 formed at the other surface t hereof; and a s pring 4 20 installed adjacent to the s lider 410 t o flexibly move the slider 410.

A slot 105 is formed at the upper surface of the main body 100, and the hand grip 412 is exposed out of the main body 100 through the slot 105.

Furthermore, a stopping jaw 303 is formed at a part of an outer circumferential surface of the second connecting portion 320 in the connection member 300, to allow the opened angle of the folder 200 to be constant when the folder 200 is opened.

An operation of the mobile terminal having such double rotation structure, as aforementioned, will now be explained.

During a voice transmitting/receiving mode, as shown in Figures 3 and 4, after rotating the folder 200 by a certain angle centering around the connection member 300 to open it, a user can talk over the phone with his/her counterpart by using the buttons 107. Here, the folder 200 is rotated centering around the first hinge axis 203 and the second auxiliary pin 340. When the folder 200 is opened, the folder 200 maintains its constant opened angle by the stopping jaw 303 formed at a part of the middle portion of the outer circumferential surface of the connection member 300. According to this, the user can conveniently talk over the phone with his/her counterpart.

As can be seen from Figure 4, during a counterpart shooting mode, a user properly adjusts a position of the camera 500 to his/her counterpart, thereafter shoots an image by pressing the buttons 107, and then can see the shot result through the display portion 205.

Furthermore, during a user himself/herself shooting mode, the user should release a locking state of the connection member locking unit 400 to convert it into a rotatable state.

That is, under the state of the folder 200 being opened, the locking projection 411 of the slider 410 falls out of the locking groove 301 by pushing it toward the spring 420 with a knob 412 held, thereby maintaining the rotatable state of the connection member 300. In this rotatable state, the first connecting portion 310 is rotated centering around the first hinge axis 103 and the first auxiliary pin 330, and the second connecting portion 320 is rotated centering around the second hinge axis 203 and the second auxiliary pin 340. According to this, the direction of the camera 500 installed at the front surface of the first connecting portion 310 of the connection member 300 is converted to face the user. Accordingly, t he u ser c an conveniently s hoot himself/herself by converting the direction of the camera 500 without turning the folder 200 by 180°.

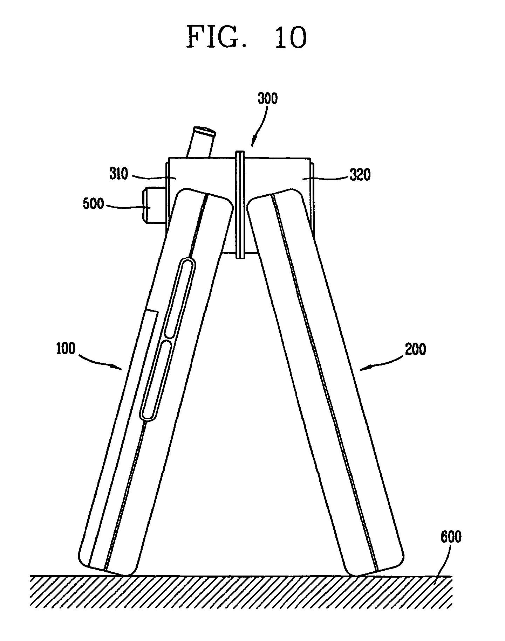

On the other side, Figure 9 is a front view showing a state that the mobile terminal having the double rotation structure in accordance with the present invention is installed at right angles to the bottom surface, and Figure 10 is a side view of the state shown in Figure 9.

As shown in Figures 9 and 10, once putting the mobile terminal on a bottom surface 600 of indoor or a table, the position of camera 500 is adjusted to face a subject (not shown), and thereby the user can shoot an image. Thus, the user uses the mobile terminal with putting it on the bottom surface 600 of indoor or the table, without holding it with hands. As a result, the user can conveniently shoot an image by making the folder 200 and the main body 100 have a function such as a tripod supporting a general camera.

As stated above, in the mobile terminal having the double rotation structure in accordance with the present invention, by adopting the double rotation structure in which the folder can be rotated and the connection member can be also rotated with the folder being left as it is, the folder can be freely opened and closed through the connection member coupling the main body to the folder and the position of the camera installed at the connection member can be freely adjusted.

As the present invention may be embodied in several forms without departing from the spirit or essential characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalence of such metes and bounds are therefore intended to be embraced by the appended claims.

## Claims

1. A mobile terminal having a double rotation structure, comprising:
- a main body (100) having a plurality of keys (107) thereon to input information and operate its functions;
- a folder (200) having a display portion (205) thereon;
- a connection member (300) having a first connecting portion (310) and a second connecting portion (320) integrally formed with the first connecting portion (310) therein, wherein the first connecting portion (310) is rotatably coupled around a first hinge axis (103) to the main body (100) and the second connecting portion (320) is rotatably coupled around a second hinge axis (203) to the folder (200); and
- a connection member locking unit (400) installed at one side of the main body (100) to selectively stop a rotation of the connection member (300);
wherein the first hinge axis (103) and the second hinge axis (203) are parallel to and spaced from each other.

2. The mobile terminal of claim 1, wherein a first receiving groove (101) is formed at one side of the main body (100) for reception of the connection member (300), and a second receiving groove (201) is formed at one side of the folder (200) for reception of the connection member (300).

3. The mobile terminal of claim 1, wherein a first hinge groove (311) is formed at one surface of the first connecting portion (310), the first hinge axis (103) is formed at one surface of the main body (100) to be inserted in the first hinge groove (311), a second hinge groove (321) is formed at one surface of the second connecting portion (320) to correspond with the first hinge groove (311), and the second hinge axis (203) is formed at one surface of the folder (200) to be inserted in the second hinge groove (321).

4. The mobile terminal of claim 3, wherein a first auxiliary groove (312) is formed at the other side of the first connecting portion (310), a first mounting groove (102) is formed at the other side of the main body (100), a second auxiliary groove (322) is formed at the other side of the second connecting portion (320), a second mounting groove (202) is formed at the other side of the folder (200), a first auxiliary pin (330) is inserted in the first auxiliary groove (312) and the first mounting groove (102), and a second auxiliary pin (340) is inserted in the second auxiliary groove (322) and the second mounting groove (202).

5. The mobile terminal of claim 4, wherein the first auxiliary pin (330) is comprised of a first fixing portion (331) inserted in the first mounting groove (102), and a first rotating portion (332) coupled rotatably and axially to the first fixing portion (331) and inserted to the first auxiliary groove (312); and
- the second auxiliary pin (340) is comprised of a second fixing portion (431) inserted in the second mounting groove (202), and a second rotating portion (432) coupled rotatably and axially to the second fixing portion (431) and inserted in the second auxiliary groove (322).

6. The mobile terminal of claim 4, wherein the main body (100) is rotatably installed centering around the first hinge axis (103) and the first auxiliary pin (330) and the folder (200) is rotatably installed centering around the second hinge axis (203) and the second auxiliary pin (340).

7. The mobile terminal of claim 4, wherein the first connecting portion (310) is rotatably installed centering around the first hinge axis (103) and the first auxiliary pin (330), and the second connecting portion (320) is rotatably installed centering around the second hinge axis (203) and the second auxiliary pin (340).

8. The mobile terminal of claim 1, wherein the connection member locking member (400), comprising:
- a slider (410) installed to be slid in the main body (100), and having a locking projection (411) formed at one surface thereof to be selectively inserted in a locking groove (301) placed in the connection member (300), and a hand grip (412) formed at the other surface thereof; and
- a spring (420) installed adjacent to the slider (410) to flexibly move the slider (410).

9. The mobile terminal of claim 8, wherein a slot (105) is formed at the upper surface of the main body (100), and the hand grip (412) is exposed out of the main body (100) through the slot (105).

10. The mobile terminal of claim 1, wherein a stopping jaw (303) is formed at a part of an outer circumferential surface of the second connecting portion (320) in the connection member (300), to allow the opened angle of the folder (200) to be constant when the folder (200) is opened.

11. The mobile terminal of claim 1, wherein the connection member (300) further comprises a camera (500) therein.

12. The mobile terminal of claim 11, wherein the camera (500) is installed at the front surface of the first connecting portion (310) of the connection member (300).

## Patentansprüche

1. Mobiles Endgerät mit einer Doppelrotationsstruktur, umfassend:
- einen Hauptkörper (100) mit einer Vielzahl von Tasten (107) darauf, um Informationen einzugeben und seine Funktionen auszuführen;
- ein Klappteil (200) mit einem Anzeigeabschnitt (205) darauf;
- ein Verbindungselement (300) mit einem ersten Verbindungsabschnitt (310) und einem zweiten Verbindungsabschnitt (320), der einstückig in dem ersten Verbindungsabschnitt (310) ausgebildet ist, wobei der erste Verbindungsabschnitt (310) um eine erste Gelenkachse (103) drehbar mit dem Hauptkörper (100) verbunden ist und der zweite Verbindungsabschnitt (320) um eine zweite Gelenkachse (203) drehbar mit dem Klappteil (200) verbunden ist; und
- eine Verbindungselement-Verriegelungseinheit (400), die an einer Seite des Hauptkörpers (100) eingebaut ist, um wahlweise eine Drehung des Verbindungselements (300) zu stoppen;
wobei die erste Gelenkachse (103) und die zweite Gelenkachse (203) parallel zueinander und voneinander beabstandet angeordnet sind.

2. Mobiles Endgerät nach Anspruch 1, bei dem eine erste Aufnahmenut (101) an einer Seite des Hauptkörpers (100) zur Aufnahme des Verbindungselements (300) gebildet ist, und eine zweite Aufnahmenut (201) an einer Seite des Klappteils (200) zur Aufnahme des Verbindungselements (300) gebildet ist.

3. Mobiles Endgerät nach Anspruch 1, bei dem eine erste Gelenknut (311) auf einer Oberfläche des ersten Verbindungsabschnitts (310) gebildet ist, die erste Gelenkachse (103) auf einer Oberfläche des Hauptkörpers (100) gebildet ist, um in die erste Gelenknut (311) eingeführt zu werden, eine zweite Gelenknut (321) auf einer Oberfläche des zweiten Verbindungsabschnitts (320) gebildet ist, um der ersten Gelenknut (311) zu entsprechen, und die zweite Gelenkachse (203) auf einer Oberfläche des Klappteils (200) gebildet ist, um in die zweite Gelenknut (321) eingeführt zu werden.

4. Mobiles Endgerät nach Anspruch 3, bei dem eine erste Hilfsnut (312) auf der anderen Seite des ersten Verbindungsabschnitts (310) gebildet ist, eine erste Befestigungsnut (102) auf der anderen Seite des Hauptkörpers (100) gebildet ist, eine zweite Hilfsnut (322) auf der anderen Seite des zweiten Verbindungsabschnitts (320) gebildet ist, eine zweite Befestigungsnut (202) auf der anderen Seite des Klappteils (200) gebildet ist, ein erster Hilfsstift (330) in die erste Hilfsnut (312) und die erste Befestigungsnut (102) eingeführt ist, und ein zweiter Hilfsstift (340) in die zweite Hilfsnut (322) und die zweite Befestigungsnut (202) eingeführt ist.

5. Mobiles Endgerät nach Anspruch 4, bei dem der erste Hilfsstift (330) aus einem ersten Fixierungsabschnitt (331), der in die erste Befestigungsnut (102) eingeführt ist, und einem ersten Drehabschnitt (332) besteht, der drehbar und axial mit dem ersten Fixierungsabschnitt (331) verbunden und in die erste Hilfsnut (312) eingeführt ist; und
- der zweite Hilfsstift (340) aus einem zweiten Fixierungsabschnitt (431), der in die zweite Befestigungsnut (202) eingeführt ist, und einem zweiten Drehabschnitt (432) besteht, der drehbar und axial mit dem zweiten Fixierungsabschnitt (431) verbunden und in die zweite Hilfsnut (322) eingeführt ist.

6. Mobiles Endgerät nach Anspruch 4, bei dem der Hauptkörper (100) drehbar um die erste Gelenkachse (103) und den ersten Hilfsstift (330) zentriert eingebaut ist und das Klappteil (200) drehbar um die zweite Gelenkachse (203) und den zweiten Hilfsstift (340) zentriert eingebaut ist.

7. Mobiles Endgerät nach Anspruch 4, bei dem der erste Verbindungsabschnitt (310) drehbar um die erste Gelenkachse (103) und den ersten Hilfsstift (330) zentriert eingebaut ist, und der zweite Verbindungsabschnitt (320) drehbar um die zweite Gelenkachse (203) und den zweiten Hilfsstift (340) zentriert eingebaut ist.

8. Mobiles Endgerät nach Anspruch 1, bei dem das Verbindungselement-Verriegelungselement (400) umfasst:
- einen Schieber (410), der zum Verschieben in dem Hauptkörper (100) eingebaut ist, und der einen an einer Oberfläche von ihm ausgebildeten Verriegelungsvorsprung (411) zum wahlweisen Einführen in eine an dem Verbindungselement (300) angeordnete Verriegelungsnut (301) und einen an seiner anderen Oberfläche ausgebildeten Handgriff (412) aufweist; und
- eine Feder (420), die benachbart zu dem Schieber (410) eingebaut ist, um flexibel den Schieber (410) zu bewegen.

9. Mobiles Endgerät nach Anspruch 8, bei dem ein Schlitz (105) auf der Oberseite des Hauptkörpers (100) gebildet ist, und der Handgriff (412) durch den Schlitz (105) aus dem Hauptkörper (100) freiliegt.

10. Mobiles Endgerät nach Anspruch 1, bei dem eine Stoppbacke (303) auf einem Teil einer Außenumfangsoberfläche des zweiten Verbindungsabschnitts (320) in dem Verbindungselement (300) gebildet ist, um es dem Öffnungswinkel des Klappteils (200) zu ermöglichen, konstant zu sein, wenn das Klappteil (200) geöffnet ist.

11. Mobiles Endgerät nach Anspruch 1, bei dem das Verbindungselement (300) ferner eine Kamera (500) darin umfasst.

12. Mobiles Endgerät nach Anspruch 11, bei dem die Kamera (500) auf der Vorderseite des ersten Verbindungsabschnitts (310) des Verbindungselements (300) eingebaut ist.

## Revendications

1. Terminal mobile ayant une double structure de rotation, comprenant :
- un corps principal (100) ayant une pluralité de touches (107) sur celui-ci pour entrer des informations et utiliser ses fonctions ;
- un clapet (200) ayant une partie d'affichage (205) sur celui-ci ;
- un élément de connexion (300) ayant une première partie de connexion (310) et une deuxième partie de connexion (320) formée de façon intégrale avec la première partie de connexion (310) dans celle-ci, dans lequel la première partie de connexion (310) est couplée de façon rotative autour d'un premier axe charnière (103) au corps principal (100) et la deuxième partie de connexion (320) est couplée de façon rotative autour d'un deuxième axe charnière (203) au clapet (200) ; et
- une unité de verrouillage (400) d'élément de connexion installée sur un côté du corps principal (100) pour sélectivement stopper une rotation de l'élément de connexion (300) ;
dans lequel le premier axe charnière (103) et le deuxième axe charnière (203) sont parallèles l'un à l'autre et espacés l'un de l'autre.

2. Terminal mobile selon la revendication 1, dans lequel une première rainure de réception (101) est formée sur un côté du corps principal (100) pour réception de l'élément de connexion (300), et une deuxième rainure de réception (201) est formée sur un côté du clapet (200) pour réception de l'élément de connexion (300).

3. Terminal mobile selon la revendication 1, dans lequel une première rainure charnière (311) est formée sur une surface de la première partie de connexion (310), le premier axe charnière (103) est formé sur une surface du corps principal (100) pour être inséré dans la première rainure charnière (311), une deuxième rainure charnière (321) est formée sur une surface de la deuxième partie de connexion (320) pour correspondre avec la première rainure charnière (311), et le deuxième axe charnière (203) est formé sur une surface du clapet (200) pour être inséré dans la deuxième rainure charnière (321).

4. Terminal mobile selon la revendication 3, dans lequel une première rainure auxiliaire (312) est formée sur l'autre côté de la première partie de connexion (310), une première rainure de montage (102) est formée sur l'autre côté du corps principal (100), une deuxième rainure auxiliaire (322) est formée sur l'autre côté de la deuxième partie de connexion (320), une deuxième rainure de montage (202) est formée sur l'autre côté du clapet (200), une première broche auxiliaire (330) est insérée dans la première rainure auxiliaire (312) et la première rainure de montage (102), et une deuxième broche auxiliaire (340) est insérée dans la deuxième rainure auxiliaire (322) et la deuxième rainure de montage (202).

5. Terminal mobile selon la revendication 4, dans lequel la première broche auxiliaire (330) est composée d'une première partie de fixation (331) insérée dans la première rainure de montage (102), et d'une première partie rotative (332) couplée de façon rotative et axiale à la première partie de fixation (331) et insérée dans la première rainure auxiliaire (312) ; et
- la deuxième broche auxiliaire (340) est composée d'une deuxième partie de fixation (431) insérée dans la deuxième rainure de montage (202), et d'une deuxième partie rotative (432) couplée de façon rotative et axiale à la deuxième partie de fixation (431) et insérée dans la deuxième rainure auxiliaire (322).

6. Terminal mobile selon la revendication 4, dans lequel le corps principal (100) est installé de façon rotative centré autour du premier axe charnière (103) et de la première broche auxiliaire (330) et le clapet (200) est installé de façon rotative centré autour du deuxième axe charnière (203) et de la deuxième broche auxiliaire (340).

7. Terminal mobile selon la revendication 4, dans lequel la première partie de connexion (310) est installée de façon rotative centrée autour du premier axe charnière (103) et de la première broche auxiliaire (330), et la deuxième partie de connexion (320) est installée de façon rotative centrée autour du deuxième axe charnière (203) et de la deuxième broche auxiliaire (340).

8. Terminal mobile selon la revendication 1, dans lequel l'élément de verrouillage (400) d'élément de connexion, comprenant :
- un coulisseau (410) installé de façon à être fait coulisser dans le corps principal (100), et ayant une saillie de verrouillage (411) formé sur une surface de celui-ci pour être sélectivement inséré dans une rainure de verrouillage (301) placée dans l'élément de connexion (300), et une poignée (412) formée sur l'autre surface de celui-ci ; et
- un ressort (420) installé de façon adjacente au coulisseau (410) pour déplacer de manière flexible le coulisseau (410).

9. Terminal mobile selon la revendication 8, dans lequel une fente (105) est formée sur la surface supérieure du corps principal (100), et la poignée (412) est exposée à l'extérieur du corps principal (100) par la fente (105).

10. Terminal mobile selon la revendication 1, dans lequel une mâchoire d'arrêt (303) est formée sur une partie d'une surface circonférentielle extérieure de la deuxième partie de connexion (320) dans l'élément de connexion (300), pour permettre que l'angle ouvert du clapet (200) soit constant lorsque le clapet (200) est ouvert.

11. Terminal mobile selon la revendication 1, dans lequel l'élément de connexion (300) comprend en outre un appareil photographique (500) dans celui-ci.

12. Terminal mobile selon la revendication 11, dans lequel l'appareil photographique (500) est installé sur la surface avant de la première partie de connexion (310) de l'élément de connexion (300).
